# FASCICULE DE BREVET EUROPEEN

(11) **EP 1 995 930 B1**
(45) Date de publication et mention de la délivrance du brevet: **15.09.2010**
(21) Numéro de dépôt: 08103823.4
(22) Date de dépôt: 05.05.2008
(51) Int. Cl.: H04L 29/06

(54) **Procédé de transcodage de sessions de type SIP**
Verfahren zur Transkodierung von Sitzungen vom Typ SIP
Method for transcoding SIP sessions

(30) Priorité: 21.05.2007 FR 0755161
(43) Date de publication de la demande: 26.11.2008
(73) Titulaire: Societé Française du Radiotéléphone, 75008 Paris (FR)
(72) Inventeur: De Moissac, Arnaud, 75017, PARIS (FR)
(74) Mandataire: Schmit, Christian Norbert Marie

(56) Documents cités:
- US-A1- 2005 044 188
- US-A1- 2005 091 362

## Description

L'invention a pour objet un procédé de transcodage de sessions de type SIP.

Le domaine de l'invention est celui des télécommunications et plus particulièrement celui de l'accès à des services via un réseau de télécommunication.

Dans l'état de la technique on connaît l'architecture IMS (IP Multimedia Subsystem, sous-système multimédia sur IP), architecture qui garantit l'interopérabilité des différentes briques d'un réseau d'un opérateur et l'interopérabilité entre les réseaux des opérateurs de télécommunications.

L'architecture IMS est bâtie sur les normes et recommandations publiées par le 3GPP pour 3rd Generation Partnership Project ou Partenariat pour un Projet de 3ème Génération. Il s'agit d'un groupe de travail de l'ETSI, qui a défini la 3G (3ème génération des réseaux mobiles) et ses évolutions.

L'architecture IMS est basée, entre autres sur le protocole SIP. SIP pour Session Initiation Protocol ou Protocole d'Initiation de Sessions, défini par le groupe de normalisation IEFT, SIP est un nouveau langage de signalisation adapté aux sessions multimédias et adapté à l'établissement et à la gestion de connexions de tiers à tiers ou de tiers à serveurs.

Cette architecture est aussi basée sur un, ou plusieurs serveurs CSCF (Call Session Control Function pour Fonction de Contrôle de Session d'Appel), pour gérer les requêtes SIP entre les terminaux et les serveurs d'applications, cette fonction comprend trois grands modules : P-CSCF (proxy, serveur mandataire), S-CSCF (serving, serveur) et I-CSCF (interrogating, serveur d'interrogation).

Un serveur CSCF est lui-même connecté à un serveur HSS Home Subscriber Server (Serveur de Gestion des Abonnés), base de données qui contient les profils des abonnés. Elle intervient dans leur authentification et l'autorisation d'accès aux services. C'est le pendant d'un serveur HLR dans un réseau mobile pré-R5 3GPP.

Cette architecture est devenue indépendante du réseau d'accès c'est-à-dire du support physique permettant l'accès. Dans la pratique tout dispositif compatible avec une version du protocole IP peut se connecter et interagir avec une architecture IMS.

Dans une telle architecture on trouve aussi des serveurs d'applications. Ils hébergent les applications traitées par IMS comme les services liés à la voix, la visioconférence ou la gestion de présence.

Le document US 2005/0044188 A1 divulgue un dispositif de conversion de HTTP-SIP.

Un des problèmes de l'état de la technique est qu'une architecture IMS est basée sur le protocole SIP tel qu'envisagé par le 3GPP (c'est-à-dire tel qu'envisagé par l'ETSI) alors que les appareils compatibles avec le protocole SIP le sont en fait avec le protocole SIP IETF.

Un autre problème de l'état de la technique est qu'une application SIP est installée sur un dispositif avec son propre pilote SIP. Donc deux applications de type "Smartphone" (téléphone logiciel) installées sur le même dispositif vont entrer en conflit. Si elles n'entrent pas en conflit elles seront de toute façon incapables d'interagir l'une avec l'autre au sein de la même session SIP.

Par exemple dans le cas d'un appel entrant il y aura un conflit entre les deux applications Smartphone pour déterminer laquelle va gérer l'appel entrant.

Egalement, par exemple dans le cas où une première application Smartphone gère déjà une première communication et qu'une deuxième communication entre, alors la deuxième application Smartphone va gérer la deuxième communication en faisant émettre une sonnerie sans indiquer à l'appelant que l'appelé est déjà en communication (occupé). Il s'agit là d'une exploitation non fonctionnelle.

Dans l'invention on résout ce problème grâce à un dispositif intermédiaire entre l'architecture IMS et le dispositif client. Ce dispositif intermédiaire met en oeuvre un procédé de transcodage de session SIP. Ce procédé remplit au moins trois fonctions :
- lisser les différences entre les protocoles SIP IETF et SIP 3GPP,
- assurer la convergence des différentes sessions à destination et/ou en provenance des dispositifs client connectés au dispositif intermédiaire en une session SIP unique,
- assurer la compatibilité d'un dispositif client avec les flux média liés aux sessions à destination et/ou en provenance des dispositifs client connectés au dispositif intermédiaire.

Pour ce faire le procédé de transcodage nécessite et propose deux interfaces :
- une interface HTTP attaquée par le dispositif client qui n'a plus besoin d'être SIP mais uniquement d'être capable de rendre/jouer et d'interagir avec les flux média reçus,
- une interface SIP via laquelle le dispositif intermédiaire communique avec l'architecture IMS.

Le procédé selon l'invention se comporte donc vu du réseau comme un client SIP, et vu du dispositif client comme un serveur Web. Un serveur Web est un serveur basant ses communications principalement sur le protocole HTTP. Cela simplifie grandement l'accès des dispositifs client aux architectures IMS.

L'invention a donc pour objet un procédé de transcodage d'au moins une session caractérisé en ce que la session transcodée est une session de type SIP et en ce que ledit procédé comporte les étapes suivantes :
- une étape, initiée par un dispositif client, d'interrogation d'un dispositif de transcodage, ladite interrogation se faisant via au moins une requête d'interrogation comportant des données d'identification permettant une première authentification du dispositif client par le dispositif de transcodage de sessions de type SIP,
- si la première authentification est réussie alors :
- une étape, initiée par le dispositif de transcodage, de deuxième authentification du dispositif de transcodage de session de type SIP sur un serveur de type SIP (type CSCF), des données d'identification de la deuxième authentification dépendant d'au moins une des premières données d'identification,
- si la deuxième authentification est réussie alors :
- une étape d'établissement d'une connexion de type SIP entre le dispositif de transcodage et le serveur de type SIP,
- une étape, mise en oeuvre par le dispositif de transcodage, réponse à l'interrogation initiée par le dispositif client dans laquelle le dispositif de transcodage produit un message d'interface dépendant au moins du résultat de la deuxième authentification,
- une étape, mise en oeuvre par le dispositif client, d'interprétation du message d'interface, ladite interprétation actualisant l'état d'un périphérique de sortie du dispositif client.

Dans une variante, le procédé selon l'invention est aussi caractérisé en ce que, lorsque une authentification forte est désirée, entre l'étape d'authentification du client auprès du dispositif de transcodage et l'étape d'authentification du dispositif de transcodage des sessions de type SIP auprès du serveur SIP, il comporte en outre l'étape suivante au cours de laquelle un dispositif passerelle entre le dispositif client et le réseau, qui comporte dans ce cas une carte SIM intégrée, établit un tunnel IP pour accéder à l'infrastructure d'accès IMS de l'opérateur en utilisant ladite carte SIM intégrée pour s'authentifier auprès de l'opérateur.

Dans une variante, le procédé selon l'invention est aussi caractérisé en ce qu'il comporte aussi les étapes suivantes :
- une étape, mise en oeuvre par le dispositif client, d'interrogation de mise à jour effectuée à intervalle régulier vers le dispositif de transcodage,
- une étape, mise en oeuvre par le dispositif de transcodage en réaction à la réception de l'interrogation de mise à jour, de production et émission d'un message d'interface,
- une étape, mise en oeuvre par le dispositif client, d'interprétation du message d'interface, ladite interprétation actualisant l'état d'un périphérique de sortie du dispositif client.

Dans une variante, le procédé selon l'invention est aussi caractérisé en ce que le contenu d'un message d'interface dépend de données reçues par le dispositif de transcodage via la connexion de type SIP, les données reçues via cette connexion étant stockées dans une mémoire d'état, le contenu de cette mémoire d'état étant associé au dispositif client.

Dans une variante, le procédé selon l'invention est aussi caractérisé en ce qu'un message d'interface comporte des codes instructions correspondant à la description d'une option devant être proposée à la sélection d'un utilisateur via une interface du dispositif client, la sélection de cette option provoquant l'émission d'un message d'activation de l'option vers le dispositif de transcodage.

Dans une variante, le procédé selon l'invention est aussi caractérisé en ce que qu'un message d'activation comporte au moins un code instruction correspondant à une action que doit effectuer le dispositif de transcodage relativement au serveur de type SIP, le traitement d'un message d'activation comportant les étapes suivantes mises en oeuvre par le dispositif de transcodage :
- négociation d'une session avec le serveur de type SIP,
- connexion à au moins un serveur d'application conformément au résultat de la négociation,
- transcodage des données reçues du serveur d'application dans un format intelligible par le dispositif client,
- transmission des données transcodées vers le dispositif client.

Dans une variante, le procédé selon l'invention est aussi caractérisé en ce que les interrogations émises par le dispositif client et le traitement des réponses à ces interrogations sont réalisés par une application de type navigateur Internet.

Dans une variante, le dispositif de transcodage réalise une mise en forme des données reçues des serveurs d'applications et une composition modulable de ces services au sein d'une page WEB unique et dynamique, le dispositif de transcodage stockant alors le profil de service de l'utilisateur et donnant également la possibilité à l'utilisateur de partager ce profil avec une communauté d'utilisateurs.

Dans une variante, le procédé selon l'invention est aussi caractérisé en ce que l'application de type navigateur Internet comporte nativement ou sous forme de modules d'extensions au moins un interpréteur de données apte à interpréter les données transcodées par le dispositif de transcodage.

Dans une variante, de la même façon que le dispositif de transcodage se situant entre le client et le serveur SIP, assure une protection de celui-ci, ce dernier, de la même façon, s'immisce au milieu d'un flux média sans le transcoder pour masquer l'adresse IP du client et protéger celui-ci, jouant ainsi le rôle de serveur mandataire.

Dans une variante, le dispositif de transcodage marque les flux afin d'indiquer aux réseaux la priorité en termes de «qualité de service» desdits flux.

L'invention sera mieux comprise à la lecture de la description qui suit et à l'examen des figures qui l'accompagnent. Celles-ci sont présentées à titre indicatif et nullement limitatif de l'invention. Les figurent montrent :
Figure 1 : une illustration des dispositifs mettant en oeuvre le procédé selon l'invention,
Figure 2 : une illustration d'étapes du procédé selon l'invention.

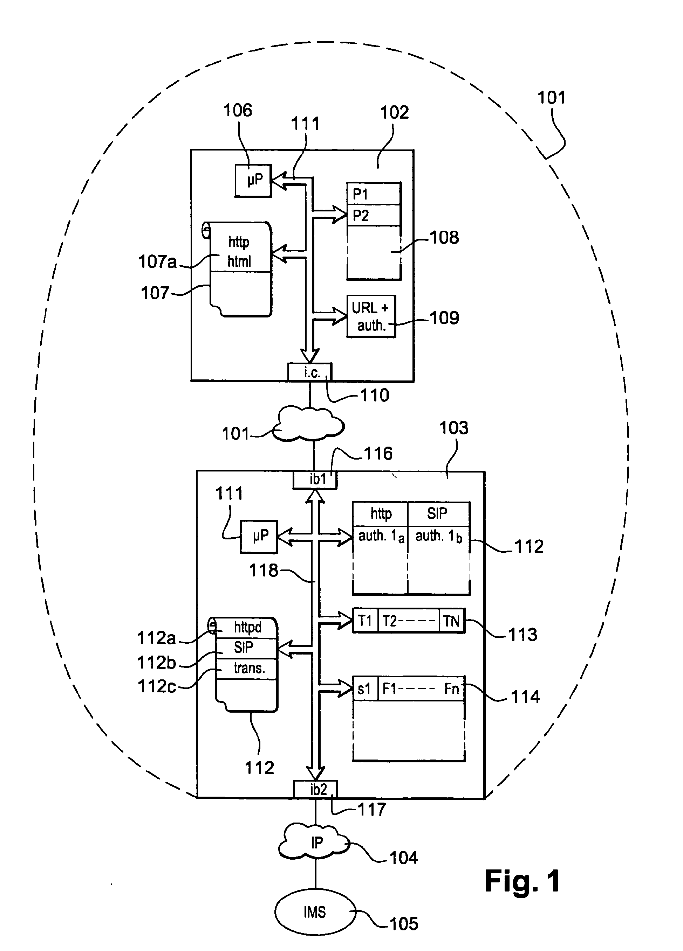

La figure 1 montre un premier réseau 101 que l'on va appeler ici réseau local. Réseau local est ici employé dans le sens de petit réseau à opposer à un réseau de type Internet. Le réseau 101 comporte un dispositif 102 client et un dispositif 103 passerelle.

Le dispositif 102 client est, par exemple, un téléphone mobile connecté au dispositif 103 passerelle par une connexion OTA (Over The Air, à travers l'air) de type Wi-Fi. Dans un autre exemple le dispositif 102 client est un ordinateur individuel (PC) connecté au dispositif 103 passerelle via une liaison OTA ou une liaison câblée de type Ethernet.

Le dispositif 103 est la "boîte" d'un opérateur fournisseur d'accès à Internet ou à tout autre réseau de communication supportant les protocoles IP (Internet Protocol existant actuellement en versions 4 et 6). Une telle boîte assure les interfaces électrique et logique entre le réseau 101 et un réseau 104 de type Internet. Ici on considère qu'il s'agit du réseau Internet lui-même. Un réseau de type Internet est un réseau ouvert permettant d'accéder à un grand nombre de dispositifs et de services. Ce type de réseau est à opposer aux réseaux privés d'entreprises ou domestiques comportant un nombre limité de dispositifs et auxquels seuls les personnels autorisés peuvent se connecter.

La figure 1 montre que le réseau 104 permet d'accéder à un réseau 105, qui est la plupart du temps une partie du réseau 104, organisé selon une architecture IMS.

Le dispositif 102 comporte :
- un microprocesseur 106,
- une mémoire 107 de programmes,
- une mémoire 108 de sous-programmes, P1 à PN, de rendu de flux, un tel sous-programme est appelé un player (joueur), un plugin (brancher dans), et/ou un addon (ajout, amélioration, extension). Un tel sous-programme permet d'accroître les fonctionnalités d'un autre programme en en devenant une partie.
- une mémoire 109 de configuration, et
- une interface 110 de connexion à un autre dispositif.

Les éléments 106 à 110 sont interconnectés par un bus 111.

Lorsque l'on prête une action à un dispositif, cette action est en fait effectuée par un microprocesseur du dispositif commandé par des codes instructions enregistrés dans une mémoire de programme dudit dispositif.

Lorsque l'on prête une action à un programme, cette action correspond à la mise en oeuvre de codes instructions correspondant à l'action par un microprocesseur d'un dispositif comportant une mémoire de programme elle-même comportant les codes instructions correspondant au programme auquel on prête l'action.

La mémoire 107 comporte au moins une zone 107a comportant des codes instructions correspondant à un navigateur Internet. Un tel navigateur permet de produire et d'émettre des requêtes vers un serveur HTTP et de d'interpréter la réponse du serveur HTTP pour produire une page web, c'est-à-dire une image comportant éventuellement un ou plusieurs éléments actifs, affichables sur un écran (non représenté) du dispositif 102. Un élément actif est, par exemple, du code selon un langage connu du navigateur. De tels langages sont, par exemple, Ecma Script, Javascript, Jscript ou encore Java. Une page Web comporte aussi des liens «hypertexte» dont la sélection par un dispositif de pointage (non représenté) du dispositif 102 permet de commander l'émission d'une nouvelle requête vers un serveur HTTP. Les serveurs HTTP sont aussi connus sous le nom de serveur Web ou Internet.

L'interface 110 comporte des circuits électroniques permettant la connexion du dispositif 102 à un réseau. Dans des mises en oeuvre préférées l'interface 110 permet de connecter le dispositif 102 au réseau 101 et est du type Wi-Fi ou Ethernet selon la structure du réseau 101. L'interface 110 est une interface Wi-Fi si le réseau 101 comporte un point d'accès Wi-Fi. L'interface 110 est un connecteur Ethernet si le réseau 101 comporte un dispositif de type commutateur Ethernet.

Comme déjà précisé, l'interface 110 permet d'intégrer le dispositif 102 au réseau 101. Cela permet au dispositif 102 de dialoguer avec les autres dispositifs du réseau 101.

La mémoire 109 est une mémoire de configuration comportant les paramètres permettant au dispositif 101 de se connecter au dispositif 103 et de s'identifier. Le contenu de la mémoire 109 permet donc de reconstituer une adresse selon la syntaxe suivante ou un équivalent:
http:://login :pass@box.local :port/action

Dans cette adresse on trouve :
- http : le protocole utilisé pour se connecter au dispositif 103, donc le choix de l'application pour réaliser cette connexion sera un navigateur Internet apte à gérer le protocole http,
- login : un identifiant,
- pass : le mot de passe associé à l'identifiant,
- box.local : l'adresse locale du dispositif 103 sur le réseau 101.
- port : un port selon l'un des protocoles IP. En général le port par défaut pour le protocole http est le port 80.

On utilisera une adresse IP dédiée du réseau IP local,
- action : l'action permettant de répondre à la requête de connexion. Le dispositif 103 comporte :
- un microprocesseur 111,
- une mémoire 112 de programmes,
- une mémoire 113 de transcodage d'authentification,
- une mémoire 114 de transcodeurs, T1 à Tn, de flux,
- une mémoire 115 de description de session,
- une interface 116 de connexion au réseau 101,
- une interface 117 de connexion au réseau 104.

Les éléments 111 à 117 sont interconnectés via un bus 118.

La mémoire 112 comporte plusieurs zones dont au moins :
- une zone 112a comportant des codes instructions correspondant à la mise en oeuvre d'un serveur HTTP (Hyper Text Transfer Protocol pour protocole de transfert HyperText). Dans notre exemple on considère qu'un serveur HTTP est un serveur HTTP dynamique, c'est-à-dire apte à effectuer des traitements allant au delà du service de fichier. Ces traitements dynamiques correspondent à l'interprétation de scripts rédigés dans un langage de programmation dynamique. De tels langages sont, par exemple, ASP, PHP, Java, Perl, Python... pour ne citer que les plus connus. Le résultat de ces traitements est servi via un message HTTP. On parle donc toujours de serveur HTTP,
- une zone 112b comportant des codes instructions correspondant à la mise en oeuvre du protocole SIP,
- une zone 112c comportant des codes instructions pour le transcodage de flux. Dans la pratique les codes instructions de cette zone font appel au bon transcodeur de la mémoire 113 en fonction des paramètres de la mémoire 114 pour transcoder un flux multimédia reçu par le dispositif 104 suite à une requête du dispositif 103. Le flux transcodé est émis vers le dispositif 102 en réponse à sa requête.

La mémoire 103 permet d'associer des paramètres d'authentification HTTP à des paramètres d'authentification SIP. Un identifiant et un mot de passe HTTP sont donc transcodés en identifiant et mot de passe SIP par le biais de cette mémoire. Dans une mise en oeuvre cette mémoire est une table comportant deux colonnes. La première colonne comporte des couples [identifiant, mot de passe] HTTP, qui sont mis en correspondance dans la deuxième colonne avec des couples [identifiant, mot de passe] SIP.

La mémoire 113 comporte de transcodeurs, c'est-à-dire des programmes de transcodage de flux. Un programme de transcodage de flux accepte en entrée des données formatées selon un type de flux et produit en sortie des données formatées selon un autre type de flux. Parmi les types de flux connus on cite au moins tous ceux acceptables pour le paramètre "Content-Type" (type de contenu) du protocole HTTP et plus particulièrement les types et sous-types définis dans la RFC2046 et les RFC liées. Tous ces types ne sont pas pris en compte par une mise en oeuvre raisonnable de l'invention. Seuls les plus usités sont transcodés.

La mémoire 114 est une mémoire de session dans laquelle sont enregistrés les paramètres, F1 à Fn, d'une session SIP. Ces paramètres sont en fait les contenus de réponses et les contenus des messages d'avertissement reçus de l'architecture IMS consécutivement à l'ouverture d'une session SIP.

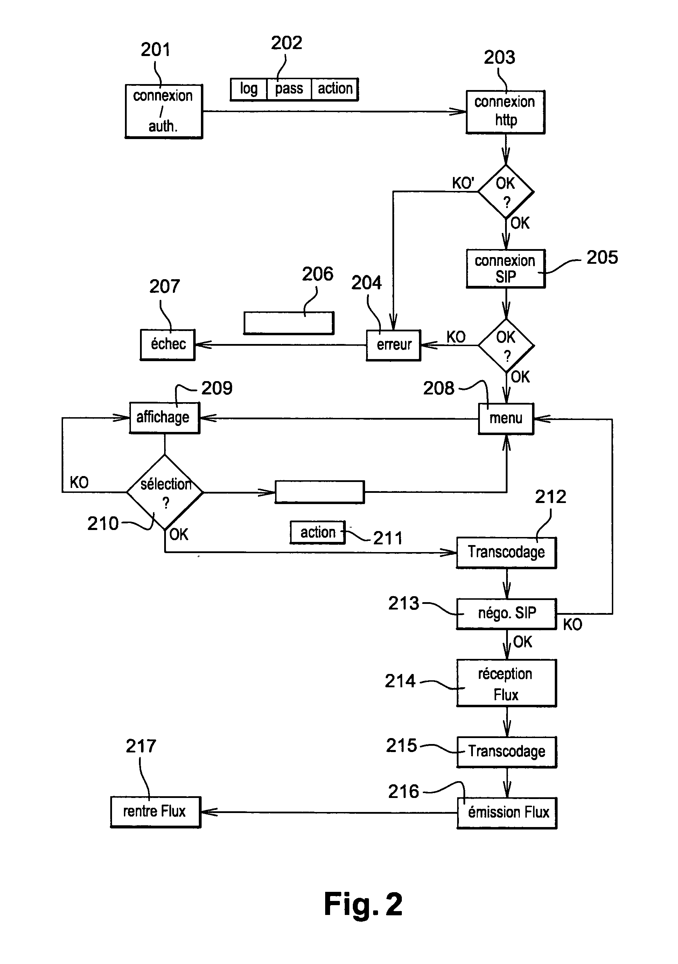

La figure 2 montre une étape 201 mise en oeuvre par le dispositif 102 de connexion au dispositif 103. Dans l'étape 201 un utilisateur du dispositif 102 sélectionne une commande de connexion dans un menu. La sélection de cette commande a pour effet de faire produire au dispositif 201 une requête de connexion selon les paramètres enregistrés dans la mémoire 109 de configuration.

Le dispositif 102 invoque l'application par défaut désignée pour gérer le protocole HTTP. Cette application est, par configuration du dispositif 102, un navigateur Internet. En effet le contenu de la mémoire 109 est une URL (Universal Resource Locator, pour localisation universelle d'une ressource) dont le protocole est le protocole HTTP. Dans tous les dispositifs ne correspondant pas à des dispositifs de traitement automatisé, ce type d'URL est associé par défaut à un navigateur Internet.

Le navigateur Internet invoqué émet une requête 202 de connexion conformément au contenu de la mémoire 109 de configuration. La requête 202 comporte au moins un champ "action" et dans une variante préférée des champs "log" et "pass".

La requête 202 est acheminée par le réseau 101 jusqu'au dispositif 103 en utilisant le protocole HTTP.

Dans une étape 203, le dispositif 103 reçoit la requête 202. Le protocole utilisé par la requête permet au dispositif 203 de déterminer que la requête doit être traitée par l'application serveur HTTP. Le contenu du champ "action" permet à l'application serveur HTTP de déterminer quelle action doit être entreprise. Dans le cas de la requête 202 il s'agit d'une action de connexion à une architecture IMS et plus particulièrement à un serveur CSCF. Comme la requête 202 comporte aussi un champ "log" et un champ "pass", l'application serveur n'a pas besoin de plus d'information pour réaliser l'action.

Dans une variante, la requête 202 ne comporte pas les champs "log" et "pass". Dans ce cas, l'application serveur HTTP met le traitement de la requête en attente et émet une requête de demande d'éléments d'authentification. Le traitement de la requête 202 est mis en attente tant que les éléments d'authentification n'ont pas été soumis.

Les éléments d'authentification, c'est-à-dire le contenu des champs "log" et "pass" permettent à l'application serveur HTTP d'effectuer une recherche dans la table 112 pour déterminer si une ligne de la table 112 correspond aux éléments d'authentification HTTP soumis via la requête 202. Si une telle ligne n'est pas trouvée, alors l'application serveur HTTP passe à une étape 204 de production et d'émission d'un message d'erreur. Sinon l'application serveur HTTP passe à une étape 205 de connexion SIP.

Le message d'erreur produit à l'étape 204 est un message 206 selon le protocole HTTP signalant que l'accès à l'action demandée est refusé.

Dans une étape 207 le dispositif 102, et plus particulièrement l'application navigateur Internet, reçoit une réponse à la requête 202. Cette réponse est un message d'erreur qui est interprété par l'application navigateur Internet, un résultat de l'interprétation étant affiché sur un écran du dispositif 102. Dans ce cas, le procédé s'arrête là, sauf à soumettre de nouvelles données d'authentification HTTP.

Dans l'étape 205 l'application utilise les éléments d'authentification SIP trouvés à l'étape 203 pour produire et émettre une requête de connexion SIP. Les éléments d'authentification SIP comporte au moins une adresse d'un serveur d'ouverture de connexion d'une architecture IMS, c'est-à-dire un serveur CSCF, un identifiant SIP et un mot de passe SIP associé à cet identifiant SIP. L'application serveur HTTP utilise alors les codes instructions de la zone 112b pour essayer d'ouvrir une session SIP. En cas d'échec de la tentative d'ouverture de session SIP alors l'application serveur HTTP passe à l'étape 204. En cas de succès l'application serveur HTTP passe à une étape 208 de production et d'émission d'un menu.

Dans une variant de l'invention le dispositif 103 comporte une configuration lui permettant de sécuriser ses échanges avec le serveur CSCF. Cette configuration comporte par exemple une clé de chiffrement permettant l'établissement d'un tunnel dit IpSec entre le dispositif 103 et le serveur CSCF. Cette configuration est, par exemple, enregistrée dans une carte SIM (carte microcircuit). Une telle carte microcircuit est alors distribué par l'opérateur auquel appartient le serveur CSCF.

Dans l'étape 208 l'application serveur HTTP enregistre dans la mémoire 114 une nouvelle ligne correspondant aux informations reçues en réponse à l'ouverture de session SIP. Cette nouvelle ligne est associée par un identifiant de session à l'application navigateur Internet ayant émis la requête 202. Chaque nouvelle requête de l'application navigateur Internet devra comporter cet identifiant pour permettre à l'application serveur HTTP d'associer à la requête une ligne dans la mémoire 114. Ce résultat est atteint, par exemple, par un échange de "cookie" entre l'application serveur HTTP et l'application navigateur Internet. Les informations enregistrées dans la mémoire 114 sont aussi appelées données de session. Dans l'exemple qui suit on considère que l'identifiant de session est S1. On parle alors de la session S1 et des données de la session S1. Cette session S1 est aussi associée à la connexion SIP.

Dans l'étape 208, en plus de d'émettre un "cookie" comportant un identifiant de session, l'application serveur HTTP produit des codes instruction correspondant à un menu selon les données de la session S1. Ces données dépendent des droits associés aux informations d'authentification SIP par l'architecture IMS.

Dans la pratique un tel menu comporte des liens permettant d'accéder à des diffusions multimédia (texte, audio, vidéo), à des services de téléphonie, à des services de visiophonie, à des services d'informations en temps réel..la liste n'étant pas exhaustive.

Dans une variante la composition de ce menu par le dispositif 103 est aussi réalisée en fonction d'un profil utilisateur enregistré dans une mémoire de profil du dispositif 103. Un tel profil permet, par exemple :
- de spécifier un ordre pour les éléments du menu,
- de spécifier quels éléments du menu doivent être mis particulièrement en évidence,
- de spécifier quels éléments du menu doivent être masqués,
- de spécifier des styles graphiques pour les éléments du menu
- ...

Cette liste n'est pas exhaustive. Chaque élément de cette liste peut de plus être associé à des données calendaires permettant de faire évoluer le profil en fonction de la date ou de la période du jour, de la semaine, du mois, de l'année...

Dans cette variante l'utilisateur du dispositif 103 a la possibilité de partager le contenu de son profil avec d'autres utilisateurs, ou groupes d'utilisateurs, spécifiés par lui. Cet ensemble d'utilisateurs est alors appelé une communauté.

Ce profile permet donc de moduler la production de la page «WEB » dynamique représentant le menu. Ce profile confère aussi un caractère unique à cette page « WEB ».

Une fois ce menu produit il est émis vers le dispositif 102 comme réponse à la requête 202. Dans une étape 209 l'application navigateur Internet reçoit une réponse à une requête précédemment émise. Le contenu de cette requête est interprété et rendu/joué selon le contenu de la réponse. Cela se traduit par la modification de l'affichage sur l'écran du dispositif 101 et/ou par la diffusion de son par le dispositif 101. Du point de vue du dispositif 102 et de l'application navigateur Internet qu'il met en oeuvre, tout se passe comme s'il était connecté à un serveur HTTP classique. Le dispositif 102 émet des requêtes HTTP et interprète les réponses à ces requêtes. Cette interprétation provoque au moins l'affichage d'un menu comportant des liens activables par un utilisateur du dispositif 102.

Dans une variante de l'invention la requête 202 de connexion comporte aussi des informations relatives aux aptitudes de rendu du navigateur Internet mis en oeuvre. Cela permet à l'application serveur HTTP de savoir quels flux multimédia peuvent être interprétés par l'application navigateur Internet.

Dans l'invention l'architecture IMS voit le dispositif 103 comme un client SIP et se comporte donc vis-à-vis de lui comme vis-à-vis d'un client SIP. Le fait de s'enregistrer sur/se connecter à une architecture IMS permet, entre autres, de recevoir des appels vocaux et/ou vidéo. En effet, cette connexion correspond à une allocation de ressource permanente tant que dure la connexion, on parle de connexion persistante. On oppose à ces connexions persistantes les connexions temporaires qui ne durent que le temps requis pour la résolution d'une transaction, c'est-à-dire le temps requis pour l'échange d'une question et de sa réponse, l'émission de la réponse terminant la connexion. Une connexion persistante est terminée par l'émission provoquée par un utilisateur d'un message de déconnexion. Cela permet à l'architecture IMS de "pousser" des données vers le dispositif via la connexion persistante établie à l'étape 205. Ces données poussées sont, par exemple, le signal d'un appel vocal entrant, une information correspondant à un service d'information en temps réel, la liste n'étant pas exhaustive. Ces données sont enregistrées comme données de sessions.

Dans l'invention une réponse de l'application serveur HTTP à l'application navigateur Internet comporte un élément actif dont le principe est le suivant :
- déclenchement d'un compte à rebours,
- à échéance du compte à rebours émission d'une requête de rafraîchissement de l'affichage courant de l'application navigateur Internet.

De l'étape 209 l'application navigateur Internet passe à une étape 210 d'attente d'un événement.

Les événements possibles sont au moins :
- arrivée à 0 du compte à rebours,
- sélection d'un lien par un utilisateur du dispositif 102.

Dans l'hypothèse dans laquelle on sort de l'étape 201 suite à une arrivée à 0 du compte à rebours, alors l'application navigateur Internet émet vers l'application serveur HTTP la même requête que celle qui provoquerait l'affichage actuel sur l'écran du dispositif 102. Cette requête est celle qui serait émise si l'utilisateur du dispositif 102 utilisait la fonctionnalité d'actualisation de l'application navigateur Internet.

Dans une variante de l'invention cette actualisation est réalisée via les technologies AJAX permettant de ne mettre à jour qu'une partie de la page Web. Cela permet un meilleur rendu visuel pour l'utilisateur en empêchant une impression de clignotement de l'affichage.

Dans tous les cas une fois l'actualisation réalisée, le compte à rebours est réinitialisé.

La requête d'actualisation est traitée comme à l'étape 208 en tenant compte de l'état actuel des données de session qui ont pu évoluer via la connexion persistante SIP.

Dans l'hypothèse dans laquelle on sort de l'étape 201 suite à une activation d'un lien par l'utilisateur, l'application navigateur Internet émet vers le dispositif 103 une requête correspondant aux paramètres du lien activé. Ces paramètres comportent au moins une information d'action.

Envisageons le cas ou le lien activé correspond à une requête de visualisation d'un flux multimédia. Dans ce cas ces paramètres comportent aussi un identifiant du flux multimédia.

Dans une étape 212 l'application serveur HTTP reçoit la requête 211 comportant une information d'action relative à la visualisation d'un contenu multimédia. Dans l'étape 212 l'application serveur HTTP initie une négociation SIP portant sur le contenu multimédia. Pour ce faire elle transcode la requête HTTP en une requête SIP qui est émise vers l'infrastructure IMS via la connexion persistante. Puis elle passe dans une étape 213 dans laquelle elle attend la réponse à la requête SIP.

Si cette réponse est positive, c'est-à-dire si les informations d'authentification SIP correspondant à la connexion persistante sont associées, dans l'architecture IMS, à des droits suffisants pour satisfaire la requête, alors l'application serveur HTTP passe à une étape 214 de réception des flux multimédia correspondant à la requête SIP. Ces flux multimédia sont décrits dans la réponse de l'architecture IMS à la requête SIP. Dans ce cas la réponse SIP OK comporte une description des flux multimédia requis pour satisfaire la requête 211.

Si cette réponse est négative alors l'application serveur HTTP met à jour les données de sessions S1 en fonction de cette réponse et passe à l'étape 208.

Dans l'étape 214 l'application serveur HTTP utilise les informations contenues dans la requête SIP OK pour se connecter à un serveur de flux multimédia. Ces informations comportent la description d'au moins un flux multimédia. Cette description inclut au moins une URL du flux. De manière optionnelle ces informations comportent le type du flux. Si ces informations ne comportent pas le type du flux alors le fait d'émettre une requête en utilisant l'URL du flux va aboutir à la réception de messages correspondant à ce flux, les en-têtes de ces messages comportant le type du flux. A partir du type du flux et des données de session, en particulier des données de session relatives aux capacités de rendu de l'application navigateur Internet, l'application serveur HTTP détermine s'il est utile de transcoder le flux.

Il est utile de transcoder le flux si le type du flux n'apparaît pas dans les capacités de rendu de l'application navigateur Internet. Dans ce cas il y a au moins deux possibilités :
- soit le dispositif 103 est apte à mettre en oeuvre le programme permettant le rendu du flux, dans ce cas l'application serveur HTTP émet un message pour proposer la mise à jour de l'application navigateur Internet avec un programme permettant la prise en compte de ce type de flux,
- soit le dispositif 103 n'est pas apte à mettre en oeuvre le programme permettant le rendu du flux, dans ce cas le flux doit être transcodé. Ici il y deux raisons qui peuvent rendre le dispositif 103 inapte : soit une incompatibilité matérielle, soit un paramétrage interdisant les mises à jour.

Dans le cas ou un transcodage est requis, l'application serveur Internet choisit un type de flux équivalent au type du flux à transcoder parmi les types de flux supportés par l'application navigateur Internet. Un fois le type équivalent choisi, l'application serveur utilise, dans une étape 215, les codes instructions Tx de la mémoire 113 correspondant au transcodage du flux à transcoder ver le flux équivalent pour transcoder le flux à transcoder. Le résultat du transcodage par Tx est envoyé, dans une étape 216, vers l'application client Internet en réponse à la requête 211.

Dans une étape 217 l'application navigateur Internet reçoit une réponse à la requête 211. Cette réponse, selon le protocole HTTP comporte un en-tête décrivant le type de données que comporte la réponse. Par configuration chaque type de données particulier est associé à une extension de l'application. Dans la mesure où lors de la connexion l'application navigateur Internet a déclaré les types de flux qu'elle pouvait gérer, l'extension correspondant au flux reçu existe forcement, elle est donc invoquée pour gérer ce flux.

Avec l'invention on voit donc qu'il est possible, même pour un dispositif non SIP, de se connecter à une infrastructure IMS et de profiter des services offerts par cette architecture.

De plus avec l'invention, tous les services et connexions SIP sont gérés par le même dispositif qui ne requiert pas d'installation d'une application particulière. Pour un utilisateur donné correspondant à un couple [identifiant, mot de passe] HTTP, il n'y a qu'une connexion SIP et donc qu'un seul gestionnaire SIP qui a une vue d'ensemble de tous les services SIP via les données de session. Il est donc tout à fait possible de faire interagir deux services SIP via un même gestionnaire. On rappelle que dans l'état de la technique chaque service SIP correspond à une application, chaque application ayant son propre gestionnaire de connexion.

L'invention permet de plus de gérer plusieurs utilisateurs simultanément chacun ayant sa session SIP et donc ses données de session.

Dans l'invention le dispositif 103 agit comme un serveur mandataire (proxy) pour le compte de l'utilisateur du dispositif 102. Ce rôle lui permet, de protéger cet utilisateur relativement à toutes les attaques venant du réseau 104. Cette protection est d'autant plus efficace qu'elle est gérée par l'opérateur prestataire fournissant le dispositif 103. Cette opérateur a en effet la possibilité de mettre à jour dynamiquement, c'est-à-dire ici à chaque fois que requis, les moyens de protection.

Dans une variante de l'invention le dispositif 103 agit sur les flux de données, en particulier sur les en-têtes des paquets de données constituant ces flux, pour assurer une bonne qualité de service en fonction des types de flux traités. Les différents services correspondant à ces différents flux sont donc rendus dans des conditions optimales.

Cette action sur les flux permet aussi de gérer la qualité de service en fonction d'un type de contrat souscrit par l'utilisateur du dispositif, ou d'une situation réseau globale particulière que doit gérer l'opérateur ayant fournit le dispositif 103. Cet opérateur a ainsi la possibilité de gérer finement les services, et l'interaction de ces services, sur le réseau 104.

## Revendications

1. Procédé de transcodage d'au moins une session **caractérisé en ce que** la session transcodée est une session de type SIP et **en ce que** ledit procédé comporte les étapes suivantes :
- une étape (201), initiée par un dispositif client, d'interrogation d'un dispositif de transcodage, ladite interrogation se faisant via au moins une requête d'interrogation comportant des données d'identification permettant une première authentification du dispositif client par le dispositif de transcodage de sessions de type SIP,
- si (203-204) la première authentification est réussie alors :
- une étape (205), initiée par le dispositif de transcodage, de deuxième authentification du dispositif de transcodage des sessions de type SIP sur un serveur de type SIP, des données d'identification de la deuxième authentification dépendant d'au moins une des premières données d'identification,
- si la deuxième authentification est réussie alors :
- une étape (205) d'établissement d'une connexion de type SIP entre le dispositif de transcodage et le serveur de type SIP,
- une étape (208), mise en oeuvre par le dispositif de transcodage, réponse à l'interrogation initiée par le dispositif client dans laquelle le dispositif de transcodage produit un message d'interface dépendant au moins du résultat de la deuxième authentification,
- une étape (209), mise en oeuvre par le dispositif client, d'interprétation du message d'interface, ladite interprétation actualisant l'état d'un périphérique de sortie du dispositif client,
- *alors que, lorsque une authentification forte est désirée, entre l'étape d'authentification du client auprès du dispositif de transcodage et l'étape d'authentification du dispositif de transcodage des sessions de type SIP auprès du serveur SIP, il comporte en outre l'étape suivante au cours de laquelle un dispositif passerelle entre le dispositif client et le réseau, qui comporte une carte SIM intégrée, établit un tunnel IP pour accéder à l'infrastructure d'accès IMS de l'opérateur en utilisant ladite carte SIM intégrée pour s'authentifier auprès de l'opérateur.*

2. Procédé selon la revendication 1, **caractérisé en ce qu'**il comporte aussi les étapes suivantes :
- une étape, mise en oeuvre par le dispositif client, d'interrogation de mise à jour effectuée à intervalle régulier vers le dispositif de transcodage,
- une étape, mise en oeuvre par le dispositif de transcodage en réaction à la réception de l'interrogation de mise à jour, de production et émission d'un message d'interface,
- une étape, mise en oeuvre par le dispositif client, d'interprétation du message d'interface, ladite interprétation actualisant l'état d'un périphérique de sortie du dispositif client.

3. Procédé selon la revendication 1 ou 2, **caractérisé en ce que** le contenu d'un message d'interface dépend de données reçues par le dispositif de transcodage via la connexion de type SIP, les données reçues via cette connexion étant stockées dans une mémoire d'état, le contenu de cette mémoire d'état étant associé au dispositif client.

4. Procédé selon l'une des revendications 1 à 3, **caractérisé en ce qu'**un message d'interface comporte des codes instructions correspondant à la description d'une option devant être proposée à la sélection d'un utilisateur via une interface du dispositif client, la sélection de cette option provoquant l'émission d'un message d'activation de l'option vers le dispositif de transcodage.

5. Procédé selon la revendication 4, **caractérisé en ce qu'**un message d'activation comporte au moins un code instruction correspondant à une action que doit effectuer le dispositif de transcodage relativement au serveur de type SIP, le traitement d'un message d'activation comportant les étapes suivantes mises en oeuvre par le dispositif de transcodage :
- négociation d'une session avec le serveur de type SIP,
- connexion à au moins un serveur d'application conformément au résultat de la négociation,
- transcodage des données reçues du serveur d'application dans un format intelligible par le dispositif client,
- transmission des données transcodées vers le dispositif client.

6. Procédé selon l'une des revendications 1 à 5, **caractérisé en ce que** les interrogations émises par le dispositif client et le traitement des réponses à ces interrogations sont réalisés par une application de type navigateur Internet.

7. Procédé selon l'une des revendications 1 à 6, **caractérisé en ce que** le dispositif de transcodage réalise une mise en forme des données reçues des serveurs d'applications et une composition modulable de ces services au sein d'une page WEB unique et dynamique, le dispositif de transcodage stockant alors le profil de service de l'utilisateur et donnant également la possibilité à l'utilisateur de partager ce profil avec une communauté d'utilisateurs.

8. Procédé selon l'une des revendications 1 à 7, **caractérisé en ce que** l'application de type navigateur Internet comporte nativement ou sous forme de modules d'extensions au moins un interpréteur de données apte à interpréter les données transcodées par le dispositif de transcodage.

9. Procédé selon l'une des revendications 1 à 8, **caractérisé en ce que**, de la même façon que le dispositif de transcodage se situant entre le client et le serveur SIP, assure une protection de celui-ci, ce dernier, de la même façon, s'immisce au milieu d'un flux média sans le transcoder pour masquer l'adresse IP du client et protéger celui-ci jouant ainsi le rôle d'un serveur mandataire.

10. Procédé selon l'une des revendications 1 à 9, **caractérisé en ce que**, le dispositif de transcodage marque les flux afin d'indiquer aux réseaux la priorité en termes de «qualité de service» desdits flux.

## Claims

1. Method for transcoding at least one session, **characterized in that** the transcoded session is a SIP session and **in that** said method comprises the following steps:
- a step (201), initiated by a client device, for interrogating a transcoding device, said interrogation being carried out through at least one interrogation request comprising identification data enabling a first authentication of the client device by the transcoding device for SIP sessions,
- and also, if (203-204) the first authentication is successful:
- a step (205), initiated by the transcoding device, for carrying out a second authentication of the transcoding device for SIP sessions on a SIP server, identification data for the second authentication depending on at least one of the first identification data,
- and also, if the second authentication is successful:
- a step (205) for establishing a SIP connection between the transcoding device and the SIP server,
- a step (208), initiated by the transcoding device, for answering to the interrogation initiated by the client device, wherein the transcoding device generates an interface message depending at least on the result of the second authentication,
- a step (209), initiated by the client device, for interpreting the interface message, said interpretation actualizing the status of a output peripheral of the client device,
- *while, in the case of a strongly desired authentication, between the step of authentication of the client by the transcoding device and the step of authentication of the transcoding device for SIP sessions by the SIP server, the said method further comprises the following step during which, between the client device and the network, a bridge device with an integrated SIM card establishes an IP tunnel for acceding to the IMS access infrastructure of the operator by using said integrated SIM card for the authentication by the opera tor.*

2. Method according to claim 1, **characterized in that** it also comprises the following steps:
- a step, initiated by the client device, for implementing at regular intervals an updating interrogation to the transcoding device,
- a step, initiated by the transcoding device by reaction to the reception of the updating interrogation, for producing and sending an interface message,
- a step, initiated by the client device, for interpreting the interface message, said interpretation actualizing the status of an output peripheral of the client device.

3. Method according to claim 1 or 2, **characterized in that** the content of an interface message depends on data received by the transcoding device through the SIP connection, said data received through this connection being stored in a status memory, the content of the status memory being associated to the client device.

4. Method according to any one of the claims 1 to 3, **characterized in that** an interface message comprises instruction codes corresponding to the description of an option to be proposed to the selection of a user through an interface of the client device, the selection of this option generating the sending of an activation message for the option to the transcoding device.

5. Method according to claim 4, **characterized in that** an activation message comprises at least one instruction code corresponding to an action the transcoding device must do relatively to the SIP server, the treatment of an activation message comprising the following steps initiated by the transcoding device:
- negotiation of a session with the SIP server,
- connection to at least one application server according to the result of the negotiation,
- transcoding of the data received by the application server into a format readable by the client device,
- transmission of the transcoded data to the client device.

6. Method according to any one of the claims 1 to 5, **characterized in that** the interrogations from the client device and the treatment of the answers to these interrogations are carried out by an application such as a web browser.

7. Method according to any one of the claims 1 to 6, **characterized in that** the transcoding device carries out a formatting of the data received from the application server and an adjustable composition of these services in one unique and dynamic WEB page, the transcoding device storing then the service profile of the user and also giving the user the possibility of sharing this profile with a community of users.

8. Method according to any one of the claims 1 to 7, **characterized in that** the Internet browser application comprises, in a built-in form or in the form of extension modules, at least one data interpreter able to interpret the data transcoded by the transcoding device.

9. Method according to any one of the claims 1 to 8, **characterized in that**, in the same way as the transcoding device between the client and the SIP server protects said client, the SIP server intrudes into the media stream, without transcoding it, in order to mask the IP address of the client and to protect said client so that said SIP server functions as an intermediate server.

10. Method according to claim 1 to 9, **characterized in that** the streams are marked by the transcoding device in order to indicate to networks the priority in terms of "Quality of Service" of said streams.

## Patentansprüche

1. Verfahren zur Umcodierung mindestens einer Sitzung, **dadurch gekennzeichnet, dass** die umcodierte Sitzung eine SIP-Sitzung ist, und dass das genannte Verfahren die folgenden Schritte aufweist:
- einen durch eine Kundenvorrichtung eingeleiteten Schritt (201) zur Abfrage einer Umcodierungsvorrichtung, wobei die genannte Abfrage durch mindestens einen Abfrageantrag durchgeführt wird, welcher Identifizierungsdaten für eine erste Authentifizierung der Kundenvorrichtung von der Umcodierungsvorrichtung für SIP-Sitzungen aufweist,
- und auch, falls (203-204) die erste Authentifizierung erfolgreich ist:
- einen durch die Umcodierungsvorrichtung eingeleiteten Schritt (205) zu einer zweiten Authentifizierung der Umcodierungsvorrichtung für SIP-Sitzungen an einem SIP-Server, wobei Identifizierungsdaten der zweiten Authentifizierung von mindestens einem der ersten Identifizierungsdaten abhängen,
- und auch, falls die zweite Authentifizierung erfolgreich ist:
- einen Schritt (205) zum Herstellen einer SIP-Verbindung zwischen der Umcodierungsvorrichtung und dem SIP-Server,
- einen durch die Umcodierungsvorrichtung eingeleiteten Schritt (208) zum Antworten auf der durch die Kundenvorrichtung eingeleiteten Abfrage, in welche die Umcodierungsvorrichtung eine mindestens vom Ergebnis der zweiten Authentifizierung abhängende Schnittstellenmeldung erzeugt,
- einen durch die Kundenvorrichtung eingeleiteten Schritt (209) zur Interpretierung der Schnittstellenmeldung, wobei die genannte Interpretierung den Status eines peripheren Ausgangsgeräts der Kundenvorrichtung aktualisiert,
- *während bei einer fest erwünschten Authentifizierung zwischen dem Authentifizierungsschritt des Kunden bei der Umcodierungsvorrichtung und dem Authentifizierungsschritt der Umcodierungsvorrichtung für SIP-Sitzungen beim SIP-Server das genannte Verfahren den folgenden Schritt darüber hinaus aufweist, im Laufe welches zwischen der Kunden vorrichtung und dem Netzwerk eine Brückenvorrichtung mit einer eingebaute SIM-Karte einen IP-Tunnel herstellt, um die IMS-Zugangsinfrastruktur des Dienstanbieters unter Verwendung der genannten eingebauten SIM-Karte zur Authentifizierung beim Dienstanbieter zu erreichen.*

2. Verfahren nach Anspruch 1, **dadurch gekennzeichnet, dass** es auch die folgenden Schritte aufweist:
- einen durch die Kundenvorrichtung eingeleiteten Schritt, zur Aufarbeitungsabfrage in regelmäßigen Abständen zur Umcodierungsvorrichtung,
- einen durch die Umcodierungsvorrichtung eingeleiteten Schritt zur Erzeugung und Sendung einer Schnittstellemeldung als Reaktion auf den Empfang der Aufarbeitungsabfrage,
- einen durch die Kundenvorrichtung eingeleiteten Schritt zur Interpretierung der Schnittstellenmeldung, wobei die Interpretierung den Status eines peripheren Ausgangsgeräts der Kundenvorrichtung aktualisiert.

3. Verfahren nach Anspruch 1 oder 2, **dadurch gekennzeichnet, dass** der Inhalt einer Schnittstellenmeldung von durch die SIP-Verbindung von der Umcodierungsvorrichtung empfangenen Daten abhängt, wobei die durch diese SIP-Verbindung empfangenen Daten in einen Statusspeicher eingespeichert werden, wobei der Inhalt dieses Statusspeichers mit der Kundenvorrichtung assoziiert wird.

4. Verfahren nach einem der Ansprüche 1 bis 3, **dadurch gekennzeichnet, dass** eine Schnittstellemeldung Befehlscodes einhält, die mit der Beschreibung einer der Selektion eines Benutzers durch eine Schnittstelle der Kundenvorrichtung zu vorschlagenden Option entsprechen, wobei die Selektion dieser Option die Sendung einer Aktivierungsmeldung für die Option zur Umcodierungsvorrichtung erzeugt.

5. Verfahren nach Anspruch 4, **dadurch gekennzeichnet, dass** eine Aktivierungsmeldung mindestens einen Befehlscode einhält, der mit einer Aktion entspricht, die relativ zum SIP-Server die Umcodierungsvorrichtung vornehmen muss, wobei die Verarbeitung einer Aktivierungsmeldung die folgenden durch die Umcodierungsvorrichtung eingeleiteten Schritte aufweist:
- Verhandlung einer Sitzung mit dem SIP-Server,
- Verbindung mit mindestens einem Anwendungsserver nach dem Verhandlungsergebnis,
- Umcodierung der vom Anwendungsserver empfangenen Daten in ein von der Kundenvorrichtung lesbares Format,
- Übertragung der umcodierten Daten zur Kundenvorrichtung.

6. Verfahren nach einem der Ansprüche 1 bis 5, **dadurch gekennzeichnet, dass** die von der Kundenvorrichtung gesendeten Abfragen und die Verarbeitung der Antworten auf diese Abfragen von einer Anwendung wie zum Beispiel ein Webbrowser durchgeführt werden.

7. Verfahren nach einer der Ansprüche 1 bis 6, **dadurch gekennzeichnet, dass** die Umcodierungsvorrichtung eine Formatbildung der von Anwendungsservern empfangenen Daten und eine flexible Zusammensetzung dieser Dienste in einer einzigen und dynamischen Webseite durchführt, wobei die Umcodierungsvorrichtung das Dienstprofil des Benutzers dann einspeichert und auch dem Benutzer erlaubt, mit einer Benutzergemeinschaft dieses Profil zu teilen.

8. Verfahren nach einem der Ansprüche 1 bis 7, **dadurch gekennzeichnet, dass** die Webbrowser-Anwendung in einer eingebauten Form oder in der Form von Hochrüstmodulen mindestens einen Dateninterpretierer aufweist, welcher für die Interpretierung der von der Umcodierungsvorrichtung umcodierten Daten geeignet ist.

9. Verfahren nach einer der Ansprüche 1 bis 8, **dadurch gekennzeichnet, dass** ebenso wie die Umcodierungsvorrichtung zwischen dem Kunden und dem SIP-Server, welche den genannten Kunden schützt, der SIP-Server ohne Umcodierung in einen Medienstrom eingrifft, um die IP-Adresse des Kunden zu verstecken, und diesen Kunden zu schützen, so dass der genannte SIP-Server als Zwischenserver funktioniert.

10. Verfahren nach einer der Ansprüche 1 bis 9, **dadurch gekennzeichnet, dass** die Umcodierungsvorrichtung die Ströme kennzeichnet, um auf die Priorität hinsichtlich der "Betriebsgüte" der genannten Ströme die Netzwerke hinzuweisen.
